# EUROPEAN PATENT SPECIFICATION

(11) **EP 3 390 703 B1**
(45) Date of publication and mention of the grant of the patent: **20.01.2021**
(21) Application number: 16876489.2
(22) Date of filing: 13.12.2016
(51) Int. Cl.: D04H 1/435, B65D 85/804, B65D 85/808, D04H 1/541, D04H 3/011, D04H 3/147, D01F 8/16

(54) **POLYLACTIC ACID-FIBERS BASED NON-WOVEN, METHOD FOR MANUFACTURING THEREOF**
AUF POLYMILCHSÄUREFASERN BASIERENDER VLIESSTOFF, VERFAHREN ZUR HERSTELLUNG DAVON
NON-TISSÉ À BASE DE FIBRES D'ACIDE POLYLACTIQUE, ET PROCÉDÉ DE FABRICATION DE CELUI-CI

(30) Priority: 14.12.2015 FR 1562319; 14.12.2015 WO PCT/EP2015/079653
(43) Date of publication of application: 24.10.2018
(60) Divisional application: 20210013.7
(73) Proprietor: Ahlstrom-Munksjö Oyj, 00101 Helsinki (FI)
(72) Inventor: VOLPE, Raymond, Windsor Locks Connecticut 06096 (US); PICARD, Emilie, 38780 Estrablin (FR); COLLINS, Stephen, Hartlepool Durham TS25 5BP (GB)
(74) Representative: Hoffmann Eitle
(86) International application number: PCT/US2016/066380
(87) International publication number: WO 2017/106191

(56) References cited:
- WO-A1-2009/145778
- WO-A1-2018/070490
- WO-A2-2012/027539
- US-A- 5 698 322
- US-A- 5 985 776
- US-A1- 2008 057 309
- US-A1- 2008 057 309
- US-A1- 2010 048 082
- US-A1- 2012 097 602
- US-A1- 2014 127 364
- US-A1- 2014 242 309
- US-B1- 6 787 493

## Description

### FIELD OF THE INVENTION

The present invention relates to the field of non-woven fabrics, especially non-woven fabrics for the food industry. The invention more particularly relates to the field of coffee or tea capsules (sometimes referred to as "cups" or "pods") used in the percolating machines. These machines are more specifically found in the US market (drip coffee).

In the following description, the invention will be more particularly described in relation to the field of coffee. However, the invention is suitable for other beverage preparation applications, for example cocoa (hot chocolate), and tea and other infusions (herbs, powders, etc.).

### BACKGROUND OF THE INVENTION

Coffee pods available on the US market generally contain about 12g of ground coffee. The amounts are less for tea on a mass basis, although the volume of material for infusion is generally comparable. Percolation time of the coffee machines is typically 30 to 60 seconds for a water volume of about 12 to 30 cl.

According to the applicant, most of the pods for this application are in the form of a plastic container, in particular made of PET, covered with a cap generally made of paper, plastic, and/or metal foil. This type of pod fully meets the client's expectations apart from the fact they are not environmental-friendly. In fact, there are actually not degradable. This kind of pod is for example sold by San Francisco Bay Company. General information about this product is available at the following links:
https://en.m.wikipedia.org/wiki/Single-serve_coffee_container
http://www.coffeereview.com/k-cups-cups-capsule-single-serve-coffees
http://www.amazon.com/San-Francisco-Bay-Variety

In the food industry, the materials used are regularly subject to increasingly stringent requirements especially regarding environment. Thus, the currently developed products have no longer the sole objective of meeting consumer's tastes. They must also meet the requirements relating to the respect of the environment. These requirements may be regulatory, and may also reflect evolving consumer preferences for reusable, recyclable, or degradable products.

But it is very difficult to recycle those capsules in order to reuse them later on. There is therefore a need to develop capsules that are fully compostable while having a volume suitable for the coffee market especially coffee obtained by percolation.

For this reason, manufacturers have orientated their researches to materials considered to be more acceptable from an environmental point of view, and more particularly to materials that contribute to the biodegradability and/or compostability of the finished product.

According to some studies, the most promising and relevant material is the polylactic acid ("PLA") that is a thermoplastic aliphatic polyester. However, the use of polylactic acid is difficult due to its limited break elongation properties. In order to receive an amount of coffee typical for a single service beverage capsule (around 12 g) it is actually necessary to produce a container having a certain depth (from 2 to 5 cm), corresponding to typical volume of about 25-30 ml. Moreover, a typical non-woven made of PLA does not achieve this goal since it has, due to the material properties of PLA, very low elongation and cannot be thermoformed into an appropriate filter element configuration without unacceptable mechanical failures. US 2012/0097602 A1 and US 2014/0127364 A1 disclose beverage capsule filter elements comprising PLA fibers.

The invention intends to solve the problem of developing a thermoforming support, based on PLA fibers, that is suitable for use as a filter in a coffee pod obtained by percolation.

The Applicant has developed a non-woven fabric comprising polylactic acid-based fibers to solve this problem. This non-woven has satisfactory mechanical elongation properties for use in a thermoforming process. It can thus be shaped for use as a filter in a drink-supplying capsule. More particularly, this non-woven, once thermoformed, can be used as trickling filter within a coffee and/or tea capsule. These and other advantages of the invention, as well as additional inventive features, will be apparent from the description of the invention provided herein.

### BRIEF SUMMARY OF THE INVENTION

The invention provides a non-woven fabric as defined in claim 1.

The foregoing non-woven fabrics may be further characterised in that the polymeric plasticizer is a polymer or copolymer of monomers selected from the group comprising the monomers: (meth) acrylic, olefin, caprolactone, ethylene, hydroxyalkanoate, ethylene glycol, propylene glycol, diacides, dialcohols.

The foregoing non-woven fabrics may be further characterised in that the monomer rate D1 is less than 1%, preferably less than 0.5%.

The foregoing non-woven fabrics may be further characterised in that the monomers rate D2 is between 2 and 12%, preferably between 8 and 12%.

The foregoing non-woven fabrics may be further characterised in that PLA-1 represents, by weight percentage relative to the weight of a fiber, from 50 to 80%, preferably from 60 to 70%.

The foregoing non-woven fabrics may be further characterised in that PLA 2 represents by weight percentage relative to the weight of a fiber, from 20 to 50%, preferably from 30 to 40%.

The foregoing non-woven fabrics may be further characterised in that the polymeric plasticizer represents, by weight percentage relative to the weight of the fiber, from 1 to 5%, preferably from 2 to 3%.

The foregoing non-woven fabrics may be further characterised in that fibers have a diameter of between 15 and 35 micrometers, more preferably between 20 and 30 micrometers, and/or a linear density of between 2 and 10 deniers, more preferably between 4 and 8 denier.

The foregoing non-woven fabrics may be further characterised in that they have a weight of between 60 and 160 g/m², preferably between 120 and 140 g/m² more preferably of 130 g/m2; and/or a thickness between 450 and 650 micrometers, advantageously between 500 and 600 micrometers.

In another aspect, the invention provides method for making any of the foregoing non-wovens comprising the steps of preparing, under melting, fibers consisting of a core containing polylactic acid (PLA-1) coated with an envelope containing polylactic acid (PLA-2); forming a non-woven by partial cooling followed by stretching and deposition of the obtained fibers on a forming mat; and calendering the non-woven fabric thus obtained.

In another aspect, the invention provides a capsule for coffee and / or tea including, as a filter which is thermoformed, the foregoing non-woven fabrics.

The capsule may be further characterised in that the depth of the thermoformed filter is between 2 cm and 4.5 cm.

In another aspect, the foregoing non-wovens are used as a filter pod in a brewing machine.

The foregoing non-woven fabrics is characterised in that it meets the biodegradability standards of ASTM D6400

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a schematic representation of a thermoforming test conducted according to the invention;
FIGS. 2A and 2B show a process of forming a beverage filter according to the present invention;
FIGS 2C and 2D show a process of forming a beverage filter and capsule according to one embodiment of present invention;
FIGS. 2E and 2F show a process of forming a beverage filter according to another embodiment of the present invention;
FIG. 3 is a perspective view of a bicomponent fiber according to the present invention;
FIG. 4 is a perspective view of a non-enclosed beverage filter of the present invention with a supporting ring;
FIG. 5 is an exploded, partially cut-away perspective view of a non-enclosed beverage filter of the present invention with a supporting ring;
FIG. 6 is a perspective view of a beverage capsule of the present invention with an enclosed filter support; and
FIG. 7 is an exploded, partially cut-away perspective view of a beverage capsule of the present invention with an enclosed filter support.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

The present invention relates to a non-woven fabric 68 comprising fibers 200 having a core/shell structure, i.e. having bicomponent fibers, suitable for thermoforming to form a filter element 50 of a beverage capsule. Unlike the typical non-wovens of the prior art, non-woven 68 comprises fibers 200, the nature and more precisely the chemical composition of which makes it possible to obtain elongation mechanical properties compatible with the desired application of a filter element 50 in beverage capsule applications. This non-woven 68 may actually be thermoformed as to obtain capsules of sufficient depth without breaking the fibers.

Thus, the specific structure and properties of the fibers 200 make the non-woven fabric 68 suitable for the manufacture of coffee and/or tea capsules by thermoforming. This non-woven 68, once thermoformed, especially enables the percolation of coffee or tea.

More specifically, the present invention relates to a non-woven fabric 68 comprising bicomponent fibers 200 having a core 210 and an envelope or sheath 220. In particular, suitable bicomponent fibers may be designed to provide improved mechanical properties for beverage filter applications and to further provide improved selection of food-grade polymers for materials in contact with beverages, food products, etc.

In one embodiment, fibers 200 include a core 210 containing polylactic acid (PLA-1) coated with an envelope or sheath 220 containing polylactic acid (PLA-2). This non-woven 68 is characterised in that:
The PLA-1 of core 210 is a copolymer of lactic acid monomer L1 and lactic acid monomer D1;
The PLA-2 of sheath 220 is a copolymer of lactic acid monomer L2 and lactic acid monomer D2, whose D2 monomers rate is greater than the monomers rate D1 of PLA-1; and
the core 210 further contains a polymeric plasticizer.

In a preferred embodiment, the non-woven 68 of the invention consists exclusively of the above-identified fibers 200. In some embodiments, the sheath 220 may also contain a plasticizer.

The non-woven fabric 68 of the invention is advantageously compostable and/or biodegradable. The term "biodegradable" may refer to any polymer, organic material, composition, polymer, etc., which may be broken down into organic substances. In other words, it degrades over time, possibly through the action of microorganisms and, in the presence or absence of oxygen. Thus, the non-woven 68 of the invention meets the ASTM D6400 standard.

It is meant by "D1 monomers rate" the ratio D1/(D1 + L1) and by "D2 monomers rate" the ratio D2/(D2 + L2), with D1 and L1 referring to the monomers of PLA-1 polymer and D2, L2 referring to the monomers of PLA-2 polymer. In addition, each monomers rate D1 and D2 is expressed in %.

It is meant by "plasticizer", any chemical compounds, which after incorporation into a polymer material increases the polymer chains mobility so as to reduce the brittleness of the material and improve its elongation properties. In this case, it is a polymeric plasticizer. The plasticizer may be supply as a masterbatch or as a compound based on one of the base material (PLA1 or PLA2). In such a case, it may contain some compatibilizing additive (usually less than 5%). In some embodiments, the plasticizer may be in the form of a mixture containing a polymeric plasticizer, additives such as, for instance, comptabilisants agents. In practice, the additives account for up to 5% by weight of plasticizer, preferably up to 3% by weight.

It is meant by "biodegradable polymer" that the polymer may be broken down into organic substances by living organisms, such as by microorganisms. Biodegradable polymers may include one or more of: polyhydroxyalkanoates (PHAs), including polylactic acid or polylactide (PLA), as well as co-polymers of PLA and PHAs other than PLA; biodegradable polyethylene (PE); biodegradable polypropylene (PP); biodegradable polybutane (PB); starch-based polymers; cellulose-based polymers; ethylene vinyl alcohol (EVOH) polymers; other biodegradable polymers such as polybutanediolsuccinic acid (PBS); etc. In a preferred embodiment, the biodegradable non-woven described herein meets the compostability and biodegrability standards of ASTM D6400.

The term "polyhydroxyalkanoates (PHAs)" refers broadly to renewable, thermoplastic aliphatic polyesters which may be produced by polymerization of the respective monomer hydroxy aliphatic acids (including dimers of the hydroxy aliphatic acids), by bacterial fermentation of starch, sugars, lipids, etc. PHAs may include one or more of: poly-beta-hydroxybutyrate (PHB) (also known as poly-3-hydroxybutyrate); poly-alpha-hydroxybutyrate (also known as poly-2-hydroxybutyrate); poly-3-hydroxypropionate; poly-3-hydroxyvalerate; poly-4-hydroxybutyrate; poly-4-hydroxyvalerate; poly-5-hydroxyvalerate; poly-3-hydroxyhexanoate; poly-4-hydroxyhexanoate; poly-6-hydroxyhexanoate; polyhydroxybutyrate-valerate (PHBV); polyglycolic acid; polylactic acid (PLA), etc., including copolymers, blends, mixtures, combinations, etc., of different PHA polymers, etc. PHAs may be synthesized by methods disclosed in, for example, U.S. Pat. No. 7,267,794 (Kozaki et al.), issued Sep. 11, 2007; U.S. Pat. No. 7,276,361 (Doi et al.), issued Oct. 2, 2007; U.S. Pat. No. 7,208,535 (Asrar et al.), issued Apr. 24, 2007; U.S. Pat. No. 7,176,349 (Dhugga et al.), issued Feb. 13, 2007; and U.S. Pat. No. 7,025,908 (Williams et al.), issued Apr. 11, 2006.

The term "polylactic acid or polylactide (PLA)" refers to a renewable, biodegradable, thermoplastic, aliphatic polyester formed from a lactic acid or a source of lactic acid, for example, renewable resources such as com starch, sugarcane, etc. The term PLA may refer to all stereoisomeric forms of PLA including L- or D-lactides, and racemic mixtures comprising L- and D-lactides. For example, PLA may include D-polylactic acid, L-polylactic acid (also known as PLLA), D,L-polylactic acid, meso-polylactic acid, as well as any combination of D-polylactic acid, L-polylactic acid, D,L-polylactic acid and meso-polylactic acid. PLAs useful herein may have, for example, a number average molecular weight in the range of from about 15,000 and about 300,000. In preparing PLA, bacterial fermentation may be used to produce lactic acid, which may be oligomerized and then catalytically dimerized to provide the monomer for ring-opening polymerization. PLA may be prepared in a high molecular weight form through ring-opening polymerization of the monomer using, for example, a stannous octanoate catalyst, tin(II) chloride, etc.

The term "starch-based polymer" refers to a polymer, or combination of polymers, which may be derived from, prepared from, etc., starch. Starch-based polymers which may be used in embodiments of the present invention may include, for example, polylactic acid (PLA), thermoplastic starch (for example, by mixing and heating native or modified starch in the presence of an appropriate high boiling plasticizer, such as glycerin and sorbitol, in a manner such that the starch has little or no crystallinity, a low T.sub.g, and very low water, e.g., less than about 5% by weight, for example, less than about 1% water), plant starch (e.g., cornstarch), etc., or combinations thereof. See, for example, starch-based polymers, such as plant starch, disclosed in published PCT Pat App. No. 2003/051981 (Wang et al.), published Jun. 26, 2003.

The term "cellulose-based polymer" refers to a polymer, or combination of polymers, which may be derived from, prepared from, etc., cellulose. Cellulose-based polymers which may be used in embodiments of the present invention may include, for example, cellulose esters, such as cellulose formate, cellulose acetate, cellulose diacetate, cellulose propionate, cellulose butyrate, cellulose valerate, mixed cellulose esters, etc., and mixtures thereof.

In response to the demand for more environmentally friendly packaging materials, a number of new biopolymers have been developed that have been shown to biodegrade when discarded into the environment. Biodegradable plastics are marketed by numerous chemical companies including DuPont, BASF, Cargill-Dow Polymers, Union Carbide, Bayer, Monsanto, Mitsui, and Eastman Chemical. Each of these companies has developed one or more classes or types of biopolymers. For example, both BASF and Eastman Chemical have developed biopolymers known as "aliphatic-aromatic" copolymers, sold under the trade names ECOFLEX and EASTAR BIO, respectively. Bayer has developed polyesteramides under the trade name BAK. Du Pont has developed BIOMAX, a modified polyethylene terephthalate (PET). Cargill-Dow has sold a variety of biopolymers based on polylactic acid (PLA). Monsanto developed a class of polymers known as polyhydroxyalkanoates (PHA), which include polyhydroxybutyrates (PHB), polyhydroxyvalerates (PHV), and polyhydroxybutyrate-hydroxyvalerate copolymers (PHBV). Union Carbide manufactures polycaprolactone (PCL) under the trade name TONE.

It is meant by "renewable polymer" a polymer, or a combination (e.g., blend, mixture, etc.) of polymers which may be obtained from replenishable renewable natural resources. In contrast, petroleum-based feedstocks typically require thousands or millions of years to be naturally created. For example, renewable polymers include polymers obtained from renewable monomers, and polymers obtained from renewable natural sources (e.g., starch, sugars, lipids, corn, sugar beet, wheat, other, starch-rich products etc.). Polymers obtained from renewable natural sources may be obtained by, for example, enzymatic processes, bacterial fermentation, other processes which convert biological materials into a feedstock or into the final renewable polymer, etc. See, for example, U.S. Pat. App. No. 20060036062 (Ramakrishna et al.), published Feb. 16, 2006, the entire disclosure and contents of which is hereby incorporated by reference. Renewable polymers which may be useful in embodiments of the present invention may include one or more of: polyhydroxyalkanoate (PHA) polymers; polycaprolactone (PCL) polymers; starch-based polymers; cellulose-based polymers, etc. Some biodegradable polymers may also be renewable polymers, which adds to their environmental friendliness.

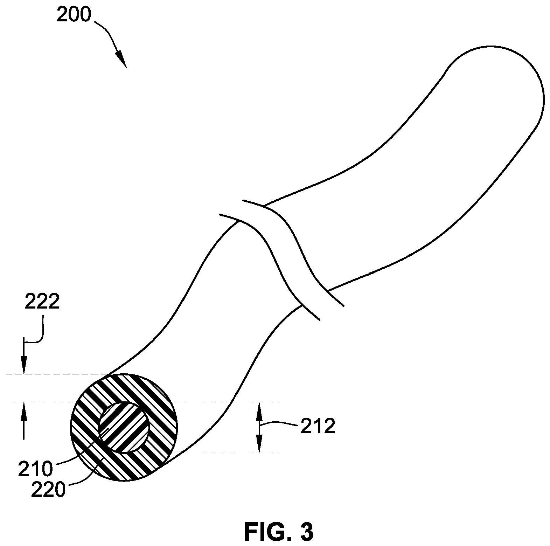

As already mentioned, one embodiment of the invention consists of a non-woven 68 of polylactic acid-based fibers 200 having a core/shell structure. As shown in FIG. 3, the polylactic acid-based fibers 200 include a fiber core 210 surrounded by a fiber sheath 220. This non-woven 68 has mechanical elongation properties enabling its shaping by thermoforming. These thermoforming properties are primarily due to the addition of a polymeric plasticizer and respectively monomers rates D1 and D2.

In general, polylactic acid (PLA-1) is more crystalline than polylactic acid (PLA-2), the monomers rate D1 being less than the monomers rate D2. Thus, PLA-1 has elongation properties less than that of PLA-2. Furthermore, given the monomers rates, PLA-1 has a melting point greater than that of PLA-2.

The incorporation of a polymeric plasticizer in the fibers core 210 makes it possible to improve the elongation properties of the PLA-1 therefore of the non-woven 68. The plasticizer reduces the interactions between the polymer chains which lead to a greater mobility amongst them. Thus, the polymeric chains have less ability to crystallize and the fibers core 210 is therefore even more ductile.

Generally, the presence of the polymeric plasticizer does not significantly affect the melting temperature of PLA-1. Thus, the plasticizer improves the elongation properties of the fibers core 210.

The polymeric plasticizer is preferably a polymer or copolymer of monomers selected from the group comprising the monomers: (meth)acrylic, olefin, caprolactone, ethylene, hydroxyalkanoate, ethylene glycol, propylene glycol, others diacids and other dialcohols.

It may especially be an ethylene copolymer-type polymer, acrylic acid and / or methacrylic acid, polycaprolactone, polyhydroxyalkanoates, polyethylene glycol, polypropylene glycol, copolyesters.

The plasticizer may represent, by weight percentage relative to the fiber's weight, 1 to 5%, preferably 2 to 3%.

In practice, the plasticizer may represent, by percentage weight, from 1.5 to 8% of the non-woven fabric fiber's core of the invention preferably 3 to 7%.

Advantageously, polylactic acid (PLA-1) has a CAS number is 26100-51-6.

In general, polylactic acid (PLA-1) has a monomers rate D1 that is less than 2%, preferably less than 1%, advantageously less than 0.5%.

PLA-1 may have a viscosity index in the melt at 210°C advantageously between 20 and 25g/10 min, more preferably between 22 and 24 g/10 min.

PLA-1 may have a crystallinity of up to about 40%. In preferred embodiments, PLA-1 has a crystallinity of between about 20 to 40%.

PLA-1 may represent, by weight percentage relative to fiber's weight, from 50 to 80%, preferably from 60 to 70%.

PLA-1 represents, by weight percentage relative to fiber's core weight, between 92 and 98.5% of the non-woven fibers core, preferably between 93 and 97%. Advantageously, polylactic acid (PLA-2) has a CAS number is 26100-51-6.

Preferably, polylactic acid (PLA-2) has a monomers rate D2 between 2 and 12%, preferably 5 to 12%, advantageously between 8 and 12%.

PLA-2 may have a viscosity index in the melt at 210 °C comprised between 10 and 20 g/10 min more preferably between 15 and 17 g/10 min.

PLA-2 may have a crystallinity of less than about 20%, and preferably less than about 10%, and more preferably less than 5%. In some embodiments, PLA-2 may be essentially amorphous.

PLA-2 may represent, by weight percentage relative to a fiber's weight, 20 to 50%, preferably 30 to 40%.

Preferably, PLA-2 represents 100% by weight of the envelope. In some embodiments, the envelope may contain a plasticizer.

Thus the non-woven 68 may comprise fibers that each contain, by weight percentage relative to the fiber's weight:
between 55 and 69% PLA-1;
between 30 and 40% PLA-2; and
between 1 and 5% plasticizer.

Depending on the desired application, the skilled person knows how to adapt the respective amounts of PLA-1, PLA-2 especially the amount of plasticizer present in the core 210 of fibers 200 of the non-woven 68. Additionally, a plasticizer may also be present in the sheath 220 of fibers 200 of the non-woven 68. The plastiziers and quantities thereof in the core 210 and optionally in sheath 220 may be the same or different.

Generally, the non-woven 68 may advantageously be composed of fibers having:
a diameter of between 15 and 35 micrometers, more preferably between 20 and 30 micrometers; and/or
a linear density of between 2 and 10 deniers, more preferably between 4 and 8 denier.

Moreover, the non-woven 68 of the invention may advantageously have:
a weight of between 60, preferably between 80 and 160 g/m², preferably between 120 and 140 g/m² more preferably of 130 g/m²; and/or
a thickness between 450 and 650 micrometers, advantageously between 500 and 600 micrometers.

Moreover, at room temperature, the non-woven 68 of the invention may have a tensile strength when dry of at least 1500 N/m, and preferably at least 3000 N/m (as measured by TAPPI T494) in the machine direction ("MD") and may have a tensile strength when dry between of at least 800 N/m (as measured by TAPPI T494) in the cross direction ("CD").

The non-woven 68 of the invention may be increased in area by thermoforming a flat disk such as blank 306 of the non-woven 68 into the shape of filter element 50, for example a hemispherical shape. After thermoforming, the resulting filter element 50 has a surface area that is at least 150% of the area of the surface of the blank 306, and preferably at least 240% of the area of the blank 306.

The present invention also relates to a method for producing a non-woven 68 as above-described. This method comprises the following steps:
a) preparing, by melting, fibers 200 consisting of a core 210 containing polylactic acid (PLA-1) coated with an envelope 220 containing polylactic acid (PLA-2),
b) forming a non-woven 68 by partial cooling followed by stretching and deposition of the obtained fibers 200 on a forming mat; and
c) calendering the non-woven fabric 68 thus obtained.

Step a) of the process consists in preparing fibers 200 with core/shell structure based on polylactic acid. It is advantageously carried out with two extruders that are simultaneously extruding the core 210 of the fibers 200 and the envelope 220 of the fibers 200.

According to an advantageous embodiment, this step is performed using at least two couples of two extruders for forming two layers of fibers. As already said, a single couple of extruders can also be used.

Each couple of extruders C comprises an extruder E1 to form the core 210 of the fibers 200 and an extruder E2 to form the envelope 220 of the fibers 200.

When four extruders are used, a first couple of extruders C1 is dedicated to the formation of the first fiber layer, while a second couple C2 can form the second fiber layer.

The two extruders (E1, E2) are independently from each other supplied in polymers and when necessary in a polymeric plasticizer. Indeed, E1 is supplied with polylactic acid (PLA-1) and with a polymeric plasticizer unlike E2 which is supplied with polylactic acid (PLA-2).

The polymeric materials PLA-1, PLA-2 and the polymeric plasticizer may be added in solid form such as granules, powders.

In addition, PLA-1 and the polymeric plasticizer may be introduced simultaneously or separately. They are advantageously prepared beforehand in a single master-batch in amounts that are depending on the desired application.

In a preferred embodiment, the master-batch preferably comprises 75% of PLA-1 and 20 to 25% of polymeric plasticizer and up to 5% of comptabilisants.

When the PLA-1, PLA-2 and the polymeric plasticizer are introduced into extruders (E1, E2), the molten material from each extruder E1 and E2 is then driven to a die by means of distribution plates. At the end of the die, fibers 200 having a core 210 containing PLA-1 plus a plasticizer, such core 210 being coated with an envelope 220 containing PLA-2.

Generally, the fibers exiting the die have a diameter of between 0.3 and 0.7 mm, more preferably between 0.4 and 0.6 mm, and even more preferably of close to 0.5 mm. Generally, the ratio of the area of the core 210 to the area of the sheath is between about 60/40 to about 70, 30, preferably about 65/35.

A quenching step (quench) partially cools the fibers so that they have an optimum temperature for the spinning step.

A spinning step by means of a "drawjet" is then used to stretch the fibers by spunlaid. This step is preferably carried out using compressed air, the so-called "spunbond" process and reduces the diameter of the fibers by stretching them.

Then the fibers fall onto a forming belt to form a web of fibers. The fibers are then conducted by the belt, and take an orientation that is induced by the machine direction.

Once the fibers web formed by the first couple C1 reaches the zone on the forming belt facing the second couple C2 of extruders, the second fibers web is deposited onto the first web so as to form a single layer of fibers.

This layer of fibers subsequently undergoes a calendering step in which the fibers pass between two heated and pressurized rollers.

The calendering temperature can be comprised between 125 and 135 °C preferentially between 128 and 130 °C and a pressure ranges from 110 to 150 kPa preferably from 125 to 135 kPa.

In practice, the calendering is carried out with two rollers. The upper roller is advantageously provided with a template, a pattern, an etching or the like for forming fixation points by localized fusing points of the fibers. In other words, the presence of a pattern on the upper roller makes it possible to melt some predetermined areas of the layer of fibers to form the non-woven.

In practice, the calendering is carried out with two rollers. The upper roller is advantageously provided with a template, a pattern, an etching or the like for forming fixation points by localized fusing points of the fibers. In other words, the presence of a pattern on the upper roller makes it possible to melt some predetermined areas of the layer of fibers to form the non-woven.

When exiting the calender rolls, the non-woven is generally in the form of a single fibrous layer, even when four extruders are used.

According to another embodiment, the threading step may be performed by hotmelt also called "meltblown". In this case, hot compressed air is applied directly at the die outlet. Thus, the fibers obtained have a diameter smaller than those of fibers obtained by "spunbond". The method "meltblown" does not require a calendering step, the fibers being sufficiently hot at the die outlet to bind to each other during their deposition on the forming belt.

Due to its ability to be thermoformed, the non-woven 68 according to the invention can particularly be used in the production of coffee capsules and/or tea and more precisely as a percolating filter such as filter element 50.

The non-woven 68 of the invention can be shaped by thermoforming, advantageously at a temperature between 80 and 110 °C, more preferably between 90 and 100 °C.

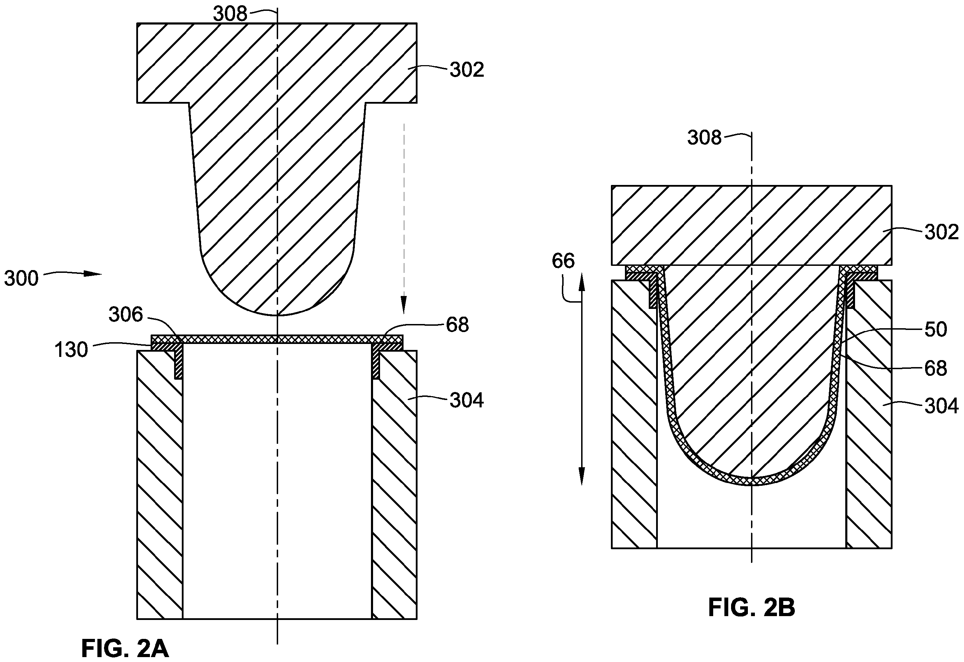

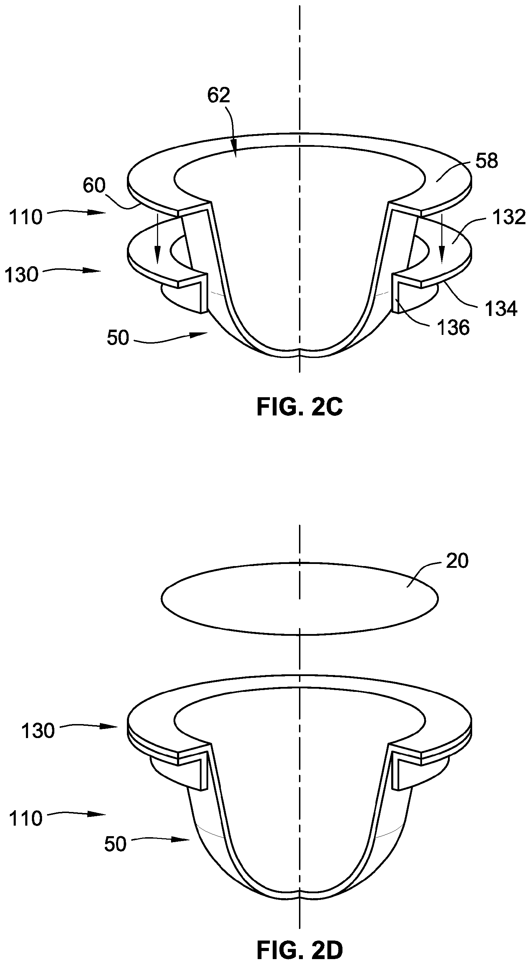

As shown in FIGS. 2A and 2B, thermoforming is generally carried out according to techniques known to those skilled in the art, particularly using a preheated form 300 having a top platen 302 and a bottom platen 304. As shown in FIG. 2A, a blank or disc 306 of non-woven material 68 is placed between top platen 302 and bottom platen 304. In a preferred embodiment, ring 130 is affixed to blank 306 prior to thermoforming, and top platen 302 is pressed downward through the opening of ring 130 to form a filter volume 62 (best shown in FIG. 2C). As shown in FIG 2B, top platen 302 thereby thermally deforms the blank 306 into filter element 50. Additionally, the fiber web of blank 306 may be preheated to facilitate thermoforming.

Generally, the blank disc 306 of non-woven 68 according to the invention can be thermoformed so as to undergo deformation to a depth 66 in the axial direction 308 advantageously between 2 and 5 cm, more preferably between 3 and 4 cm, without suffering mechanical failure of the non-woven fabric 68. After thermoforming of filter element 50, the volume contained by filter volume 62 is typically between about 20 to 40 ml, and preferably between about 25-30 ml.

In one particular embodiment, the fibers after thermoforming of filter element 50 of beverage capsule 10 have a diameter of between 18 and 20 microns. More generally, the fibers after thermoforming of filter element 50 of beverage capsule 10 may have a diameter of between 15 and 25 microns.

In one embodiment, non-woven filter element 50 formed from the non-woven 68 of the invention that are suitable for use in a beverage capsule has a porosity profile as follows:

| | Flat - before thermoforming | After thermoforming |
|---|---|---|
| PMI smallest pores (microns) | 10-50 | 30-70 |
| PMI mean pores (microns) | 30-80 | 60-110 |
| PMI biggest pores (microns) | 70-100 | 100-160 |
| Textest Permeability (200Pa) (1/m²/s) Sample: reduced diameter 14mm | 100-500 | 1200-1900 |

Thus, the present invention also relates to a coffee and/or tea capsule, comprising as a thermoformed filter, the non-woven above-described. Construction of single-serving beverage capsules is generally known in the art, and is described in a number of prior art documents including US8361527, US5840189, and EP1529739. Typical examples are discussed in further detail below.

The capsule can also comprise a collar and a seal.

The collar enables to maintain the capsule in a brewing machine.

The seal may consist of a non-woven fibers material selected from the group consisting of paper, non-woven, compostable film, and mixtures thereof.

In practice, the depth 66 of the thermoformed filter element 50 is between 2 and 5 centimeters. In a more preferred embodiment, the depth 66 of the filter element 50 is between 3 and 4 centimeters.

The invention also relates to the use of the non-woven as above-described as a filter for pod in a brewing machine.

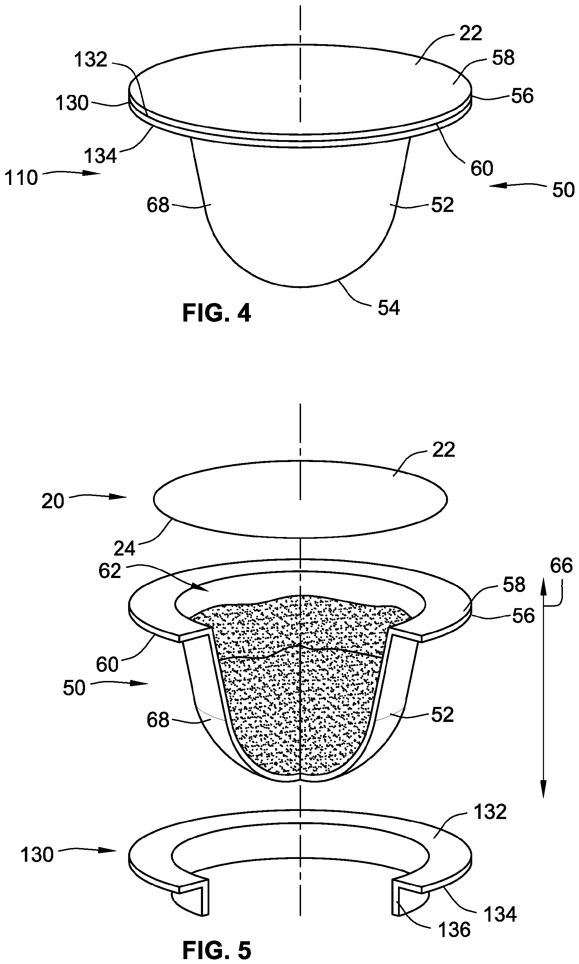

Referring to FIGS. 4 and 5, an embodiment of a typical beverage capsule 110 is shown. Such beverage capsules 110 are commonly formed from a lid portion 20, a filter support 130, and a filter portion 50.

Filter element 50 includes a generally hemispherical or cylindrical, frustoconical, or conical side wall 52 and a filter flange 56. Filter element 50 includes a bottom wall 54. As shown, bottom wall 54 is generally rounded. In other embodiments, bottom wall 54 may be flat, a tapered cone, etc. In a typical embodiment, the transition between bottom wall 54 and side wall 52 is rounded to minimize areas of high stress and fiber breakage during thermoforming. Filter flange 56 includes top flange surface 58 and a bottom flange surface 60. Filter flange 56 of filter element 50 is sized with diameter 64 to mate top flange surface 58 with bottom ring surface 134 when filter element 50 is coupled to filter support 130. Alternatively, bottom flange surface 60 may be coupled to top ring surface 132. Filter flange 56 and filter support 130 may be joined by, for example, heat welding, ultrasonic welding, laser welding, adhesive, etc., as shown in FIGS. 2C and 2D. Filter element 50 is sized to receive a portion of coffee, tea, cocoa, etc. for infusion. In a typical embodiment, filter element 50 has a diameter 64 of about 5 cm, and a depth 66 of between about 2 cm to 5 cm, preferably about 3 cm to 4 cm. In a typical embodiment, filter element 50 has a volume of about 20 ml to 40 ml, preferably 25-30 ml. After filter element 50 is filled with a portion of the beverage material, a lid 20 may be affixed to filter support 130 over filter volume 62 to seal the contents of the beverage capsule within filter volume 62.

Beverage capsule 110 includes a filter support, shown as a supporting ring 130. Supporting ring 130 is shown as a circular annular ring having a top ring surface 132 and a bottom ring surface 134. Supporting ring 130 may optionally include a perpendicular strengthening cylinder 136. Bottom flange surface 60 of filter element 50 may be joined to top ring surface 132 of supporting ring 130 by, for example, heat welding, ultrasonic welding, laser welding, adhesive, etc. Alternatively, top flange surface 58 of filter element 50 may be joined to bottom ring surface 134 of supporting ring 130. In other embodiments annular ring 130 may be non-round, for example oval, elliptical, etc.

Lid portion 20 is an openable lid or pierceable lid component, as is generally known in the art. Lid portion 20 includes an outer or environment-facing surface 22 and an inner or compartment-facing surface 24. Lid portion 20 may be formed as a single layer or a multi-layer composite material. Lid portion 20 may be formed from a metal film, plastic film, and/or paper, and may include an oxygen, gas, or vapor-impermeable barrier layer or membrane. The environment-facing surface 22 of lid portion 20 may be printed with identifying information identify the capsule contents for a consumer. Lid portion 20 may optionally comprise or consist of a composition which meets the biodegradability standards of ASTM D6400.

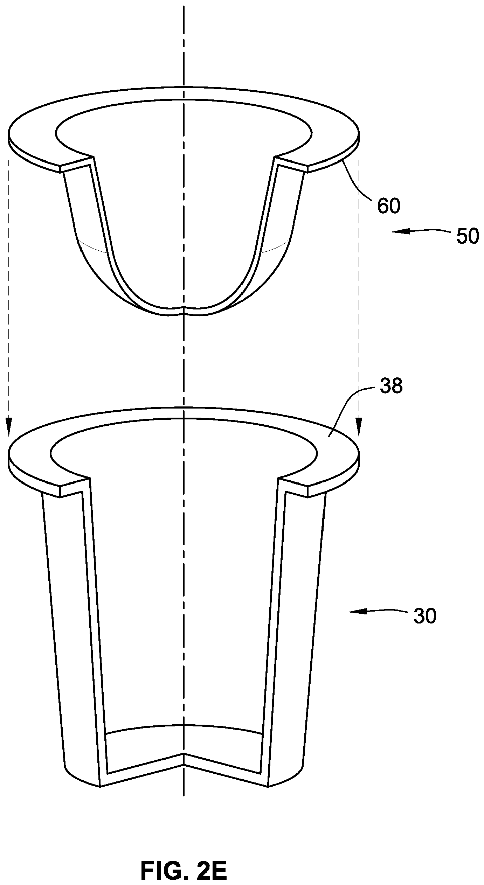

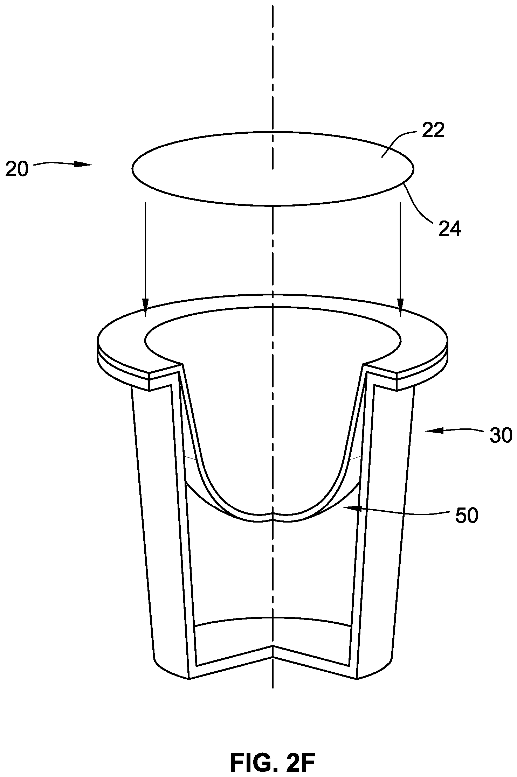

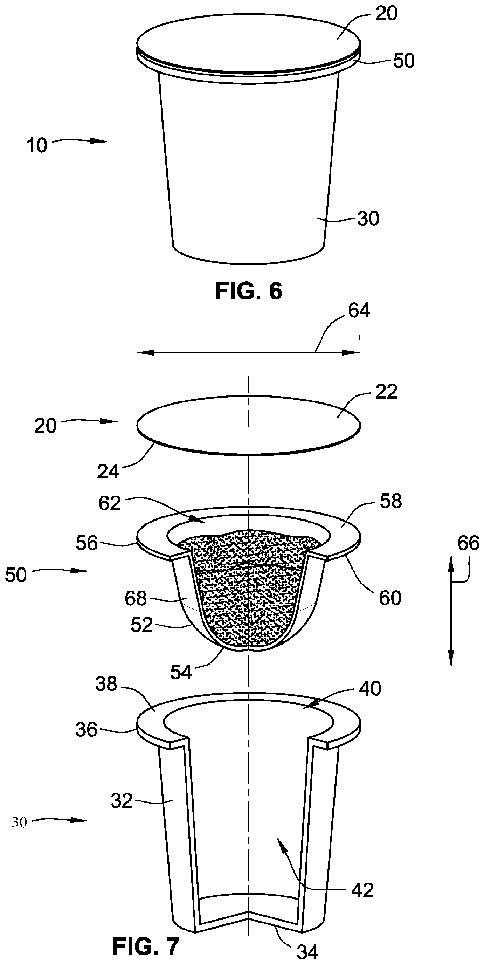

Referring to FIGS. 6 and 7, another embodiment of a beverage capsule 10 is shown. In this embodiment, beverage capsule 10 further includes a filter support, shown as cup-shaped shell portion 30. Shell portion 30 includes a generally cylindrical or frustoconical side wall 32, bottom end wall 34, and annular flange 36. Annular flange 36 defines an annular opening 40 at the top end of shell portion 30 opposite to bottom end wall 34. Annular flange 36 comprises an annular top surface 38. Side wall 32 and bottom end wall 34 thereby define an inner compartment 42 of beverage capsule 10. Filter flange 56 and filter support 30 may be joined by, for example, heat welding, ultrasonic welding, laser welding, adhesive, etc., as shown in FIGS. 2E and 2F. Filter element 50 is sized to receive a portion of coffee, tea, cocoa, etc. for infusion. In a typical embodiment, filter element 50 has a diameter 64 of about 5 cm, and a depth 66 of between about 2 cm to 5 cm, preferably about 3 cm to 4 cm. After filter element 50 is filled with a portion of the beverage material, a lid 20 is typically affixed over filter volume 62 to seal the contents of the beverage capsule within. Shell portion 30 may optionally comprise or consist of a composition which meets the biodegradability standards of ASTM D6400.

The invention and its related advantages are shown in the following examples as an illustration and are thus not limited to those.

### EXAMPLE

Four different sets 1 to 4 are carried out, each set comprising four non-woven supports. The supports have the configurations as detailed below. In each set, the nature of the plasticizer varies.
Support 1: 100% by weight of monocomponent fibers of PLA 6100D supplied by NATURWORKS.
Support 2: 100% by weight of monocomponent fibers made of a mixture comprising 93% by weight of fibers of PLA 6100D and 7% by weight of plasticizer.
Support 3: 100% by weight of bicomponent fibers consisting of a core of PLA 6100D representing 80% by weight of the fiber and an envelope made of PLA 6302D representing 20% by weight of the fiber. In this case, the core is plasticizer-free.
Support 4 (invention): 100% by weight of bicomponent fibers consisting of a core containing PLA 6100D (93% by weight relative to the weight of the core) and plasticizer (7% by weight relative to the weight of the core), which core represents 80% by weight of the fiber and an envelope made of PLA 6302D representing 20% by weight of the fiber.

For each set, the nature of the plasticizer is varying:
Set 1 represents the case where the plasticizer is an ethylene-acrylic copolymer marketed by Arkema under the trademark "BIOSTRENGTH".
Set 2 represents the case where the plasticizer is a copolyester commercially available from BASF under the Trademark "ECOFLEX".
Set 3 represents the case where the plasticizer is essentially a polyhydroxyalkanoate sold by the company Danimer.
Set 4 represents the case where the plasticizer is essentially a polyhydroxyalkanoate sold by the company Metabolix.

The substrates are manufactured, at a laboratory scale, according to the method below. Basically,
a) preparing fibers by meting and partial cooling
b) forming a non-woven by stretching the fibers and depositing them on a forming belt; and
c) calendering the non-woven fabric obtained.

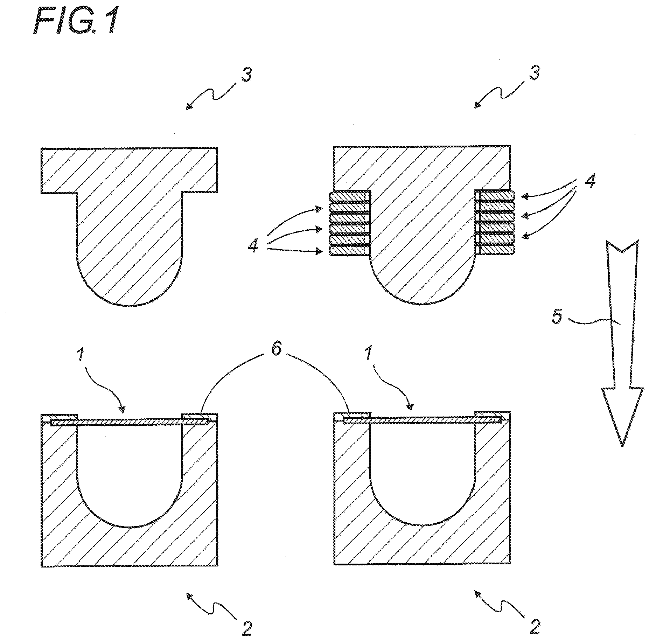

A thermoforming test is carried out for each support according to the following method illustrated on FIG. 1.

A non-woven sample (1) is fixed with a mounting ring (6) on a non-heated support (2). A heated spare punch (3) is applied on the non-woven with gradual depths ranging from 2 to 4.5 cm. For this purpose, a succession of rings (4) is used with 0.5 cm in height. The tests were carried out on 4 samples of each the supports. The arrow 5 designates the thermoforming direction.

For each set, the thermoforming depth results are the following:
for the support 1, the thermoforming depth is 2.5 cm.
for the support 2, the thermoforming depth is 3 cm maximum.
for the support 3, the thermoforming depth is 2.5 cm.
for the support 4 of the invention, thermoforming depth is 4.5 cm.

Beyond these depths, the support breaks or has some holes which are not compatible with use as a filter element 50 of a beverage capsule.

The results show that the presence of a bicomponent structure of PLA fibers whose core contains a polymeric plasticizer is necessary to obtain a sufficient thermoforming depth suitable for use in a filter element 50 of a beverage capsule.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. Non-woven fabric suitable for thermoforming to form a beverage capsule filter element comprising fibers consisting of a core containing polylactic acid (PLA-1) coated with an envelope containing polylactic acid (PLA-2) **characterized in that**:
- PLA-1 is a copolymer of lactic acid monomers L1 and lacticacid monomers D1;
- PLA-2 is a copolymer of lactic acid monomers L2 and lactic acid D2;
- wherein a D2 monomer ratio D2/(D2+L2) is greater than a D1 monomer ratio D1/(D1+L1); wherein
- the core further contains a polymeric plasticizer; and wherein
- the non-woven fabric meets the biodregability standards of ASTM D6400.

2. Non-woven fabric according to claim 1, **characterized in that** the polymeric plasticizer is a polymer or copolymer of monomers selected from the group comprising the monomers: (meth) acrylic, olefin, caprolactone, ethylene, hydroxyalkanoate, ethylene glycol, propylene glycol, diacides, dialcohols.

3. A non-woven fabric according to claim 1 or 2, **characterized in that** the D1 monomer ratio is less than 1%, preferably less than 0.5%.

4. Non-woven fabric according to one of claims 1 to 3, **characterized in that** the D2 monomer ratio is between 2 and 12%, preferably between 8 and 12%.

5. A non-woven fabric according to one of the claims 1 to 4, **characterized in that** PLA-1 represent, by weight percentage relative to the weight of a fiber, from 50 to 80%, preferably from 60 to 70%.

6. A non-woven fabric according to one of the claims 1 to 5, **characterized in that** PLA-2 represents by weight percentage relative to the weight of a fiber, from 20 to 50%, 35 preferably from 30 to 40%.

7. A non-woven fabric according to one of the claims 1 to 6, **characterized in that** the polymeric plasticizer represents, by weight percentage relative to the weight of the fiber, from 1 to 5%, preferably from 2 to 3%.

8. A non-woven fabric according to one of the claims 1 to 7, **characterized in that** fibers have:
- a diameter of between 15 and 35 micrometers, more preferably between 20 and 30 micrometers; and/or
- a linear density of between 2 and 10 deniers, more preferably between 4 and 8 denier.

9. A non-woven fabric according to one of the claims 1 to 8, **characterized in that** it has:
- a weight of between 60 and 160 g/m², preferably between 120 and 140g/m² more preferably of 130 g/m²; and/or
- a thickness between 450 and 650 micrometers, advantageously between 500 and 600 micrometers.

10. A method for making a non-woven according to any of claims 1 to 10 comprising the steps of:
a) preparing, under melting, fibers consisting of a core containing polylactic acid (PLA-1) coated with an envelope containing polylactic acid (PLA-2),
b) forming a non-woven by partial cooling followed by stretching and deposition of the obtained fibers on a forming mat;
c) calendering the non-woven fabric thus obtained.

11. Capsule for coffee and / or tea including, as a filter which is thermoformed, the non- woven according to any of claims 1 to 9.

12. Capsule according to claim 11, **characterized in that** the depth of the thermoformed filter is between 2 cm and 4.5 cm.

13. Use of the non-woven according to one of the claims 1 to 9 as a filter pod in a brewing machine.

## Patentansprüche

1. Vliesstoff, geeignet zum Thermoformen, um ein Getränkekapselfilterelement zu bilden, umfassend Fasern, die aus einen Polymilchsäure (PLA-1)-haltigen Kern bestehen, der mit einer Polymilchsäure (PLA-2)-haltigen Hülle beschichtet ist, dadurch charakterisiert, dass:
- PLA-1 ein Copolymer aus Milchsäuremonomeren L1 und Milchsäuremonomeren D1 ist;
- PLA-2 ein Copolymer aus Milchsäuremonomeren L2 und Milchsäure D2 ist;
- wobei ein D2-Monomerverhältnis D2/(D2+L2) größer ist, als ein D1-Monomerverhältnis D1/(D1+L1); wobei
- der Kern ferner einen polymeren Weichmacher enthält; und wobei
- der Vliesstoff die Standards der biologischen Abbaubarkeit gemäß ASTM D6400 erfüllt.

2. Vliesstoff gemäß Anspruch 1, dadurch charakterisiert, dass der polymere Weichmacher ein Polymer oder Copolymer aus Monomeren ist, die ausgewählt sind aus der Gruppe umfassend die Monomere: (Meth)Acryl, Olefin, Caprolacton, Ethylen, Hydroxyalkanoat, Ethylenglykol, Propylenglykol, Disäuren, Dialkoholen.

3. Vliesstoff gemäß Anspruch 1 oder 2, dadurch charakterisiert, dass das D1-Monomerverhältnis weniger als 1%, bevorzugt weniger als 0.5% beträgt.

4. Vliesstoff gemäß einem der Ansprüche 1 bis 3, dadurch charakterisiert, dass das D2-Monomerverhältnis zwischen 2 und 12%, bevorzugt zwischen 8 und 12% liegt.

5. Vliesstoff gemäß einem der Ansprüche 1 bis 4, dadurch charakterisiert, dass PLA-1 in Gewichtsprozent bezogen auf das Gewicht einer Faser 50 bis 80%, bevorzugt 60 bis 70% ausmacht.

6. Vliesstoff gemäß einem der Ansprüche 1 bis 5, dadurch charakterisiert, dass PLA-2 in Gewichtsprozent bezogen auf das Gewicht einer Faser 20 bis 50%, bevorzugt 30 bis 40% ausmacht.

7. Vliesstoff gemäß einem der Ansprüche 1 bis 6, dadurch charakterisiert, dass der polymere Weichmacher in Gewichtsprozent bezogen auf das Gewicht der Faser 1 bis 5%, bevorzugt 2 bis 3% ausmacht.

8. Vliesstoff gemäß einem der Ansprüche 1 bis 7, dadurch charakterisiert, dass die Fasern aufweisen:
- einen Durchmesser zwischen 15 und 35 Mikrometern, bevorzugter zwischen 20 und 30 Mikrometern; und/oder
- eine lineare Dichte zwischen 2 und 10 Denier, bevorzugter zwischen 4 und 8 Denier.

9. Vliesstoff gemäß einem der Ansprüche 1 bis 8, dadurch charakterisiert, dass er aufweist:
- ein Gewicht zwischen 60 und 160 g/m², bevorzugt zwischen 120 und 140 g/m², bevorzugter von 130 g/m²; und/oder
- eine Dicke zwischen 450 und 650 Mikrometern, vorzugsweise zwischen 500 und 600 Mikrometern.

10. Verfahren zur Herstellung eines Vliesstoffes gemäß einem der Ansprüche 1 bis 9, umfassend die Schritte:
a) Herstellen, unter Schmelzen, von Fasern, die aus einem Polymilchsäure (PLA-1)-haltigen Kern bestehen, der mit einer Polymilchsäure (PLA-2)-haltigen Hülle beschichtet ist,
b) Ausbilden eines Vlieses durch partielles Kühlen, gefolgt von Ausziehen und Abscheiden der erhaltenen Fasern auf einer Formmatte;
c) Kalandern des auf diese Weise erhaltenen Vliesstoffes.

11. Kapsel für Kaffee und/oder Tee, enthaltend, als einen thermogeformten Filter, das Vlies gemäß einem der Ansprüche 1 bis 9.

12. Kapsel gemäß Anspruch 11, dadurch charakterisiert, dass die Tiefe des thermogeformten Filters zwischen 2 cm und 4,5 cm liegt.

13. Verwendung des Vlieses gemäß einem der Ansprüche 1 bis 9 als ein Filterpad in einer Brühmaschine.

## Revendications

1. Tissu non tissé approprié pour un thermoformage pour former un élément de filtre de capsule de boisson comprenant des fibres se composant d'un noyau contenant de l'acide polylactique (PLA-1) revêtu d'une enveloppe contenant de l'acide polylactique (PLA-2), **caractérisé en ce que** :
- PLA-1 est un copolymère de monomères d'acide lactique L1 et de monomères d'acide lactique D1 ;
- PLA-2 est un copolymère de monomères d'acide lactique L2 et d'acide lactique D2;
- dans lequel le taux d'un monomère D2, D2/(D2 + L2), est supérieur au taux d'un monomère D1, D1/(D1 + L1) ; dans lequel
- le noyau contient en outre un plastifiant polymère ; et dans lequel
- le tissu non tissé satisfait les normes de biodégradabilité de ASTM D6400.

2. Tissu non tissé selon la revendication 1, **caractérisé en ce que** le plastifiant polymère est un polymère ou un copolymère de monomères sélectionnés dans le groupe comprenant les monomères : (méth)acryliques, une oléfine, la caprolactone, l'éthylène, l'hydroxyalcanoate, l'éthylène glycol, le propylène glycol, les diacides, les dialcools.

3. Tissu non tissé selon la revendication 1 ou 2, **caractérisé en ce que** le taux d'un monomère D1 est inférieur à 1 %, de préférence inférieur à 0,5 %.

4. Tissu non tissé selon l'une des revendications 1 à 3, **caractérisé en ce que** le taux d'un monomère D2 est entre 2 et 12 %, de préférence entre 8 et 12 %.

5. Tissu non tissé selon l'une des revendications 1 à 4, **caractérisé en ce que** PLA-1 représente, en pourcentage en poids par rapport au poids d'une fibre, de 50 à 80 %, de préférence de 60 à 70 %.

6. Tissu non tissé selon l'une des revendications 1 à 5, **caractérisé en ce que** PLA-2 représente, en pourcentage en poids par rapport au poids d'une fibre, de 20 à 50 %, de préférence de 30 à 40 %.

7. Tissu non tissé selon l'une des revendications 1 à 6, **caractérisé en ce que** le plastifiant polymère représente, en pourcentage en poids par rapport au poids d'une fibre, de 1 à 5 %, de préférence de 2 à 3 %.

8. Tissu non tissé selon l'une des revendications 1 à 7, **caractérisé en ce que** les fibres présentent :
- un diamètre d'entre 15 et 35 micromètres, plus préférentiellement entre 20 et 30 micromètres ; et/ou
- une densité linéaire d'entre 2 et 10 deniers, plus préférentiellement entre 4 et 8 deniers.

9. Tissu non tissé selon l'une des revendications 1 à 8, **caractérisé en ce qu'**il présente :
- un poids d'entre 60 et 160 g/m², de préférence entre 120 et 140 g/m², plus préférentiellement de 130 g/m² ; et/ou
- une épaisseur entre 450 et 650 micromètres, de manière avantageuse entre 500 et 600 micromètres.

10. Procédé pour fabriquer un non tissé selon l'une quelconque des revendications 1 à 9 comprenant les étapes consistant :
a) à préparer, en cours de fusion, des fibres se composant d'un noyau contenant de l'acide polylactique (PLA-1) revêtu d'une enveloppe contenant de l'acide polylactique (PLA-2),
b) à former un non tissé par refroidissement partiel suivi par étirage et dépôt des fibres obtenues sur un tapis de formation ;
c) à calandrer le tissu non tissé ainsi obtenu.

11. Capsule pour du café et/ou du thé incluant, en tant que filtre qui est thermoformé, le non-tissé selon l'une quelconque des revendications 1 à 9.

12. Capsule selon la revendication 11, **caractérisée en ce que** la profondeur du filtre thermoformé est entre 2 cm et 4,5 cm.

13. Utilisation du non-tissé selon l'une des revendications 1 à 9 en tant que capsule de filtre dans une machine d'infusion.
